# EUROPEAN PATENT SPECIFICATION

(11) **EP 2 528 430 B1**
(45) Date of publication and mention of the grant of the patent: **06.05.2020**
(21) Application number: 11736701.1
(22) Date of filing: 15.03.2011
(51) Int. Cl.: A01K 7/00, A01K 39/02

(54) **POULTRY DRINKER SYSTEM**
GEFLÜGELTRÄNKENSYSTEM
SYSTÈME D'ABREUVOIR POUR VOLAILLE

(30) Priority: 27.01.2010 GB 201001294
(43) Date of publication of application: 05.12.2012
(73) Proprietor: Plasson Ltd, 37805 Kibbutz Maagan Michael (IL)
(72) Inventor: KATZ, Oded, 37805 Kibbutz Maagan Michael (IL); BERNAT, Yonatan, 37805 Kibbutz Maagan Michael (IL)
(74) Representative: Boult Wade Tennant LLP
(86) International application number: PCT/IB2011/051077
(87) International publication number: WO 2011/092678

(56) References cited:
- GB-A- 322 993
- JP-A- 2005 202 736
- US-A- 4 922 955
- US-A- 5 072 749
- US-A- 5 284 110
- US-A- 5 765 588
- US-A- 5 967 167
- US-A1- 2003 111 019
- US-B1- 6 253 708
- US-B1- 6 341 620
- US-B1- 6 776 180

## Description

### FIELD OF THE INVENTION

The present invention relates to a system for providing liquid to animals, particularly suited for providing liquid, typically water, to poultry.

### BACKGROUND OF THE INVENTION

Drinker systems for supplying drinking water or the like to poultry typically include several drinker lines, each line having a plurality of water dispensers (e.g. nozzles, nipples or the like). Relatively high pressure water from a common water source is delivered to one or more regulators that provide water to the drinker line at a low/reduced pressure.

It is believed that the drinker systems disclosed in US 5,967,167 and US 6,253,708 well describe the present state of the art. US 6 253 708 discloses a drinker system for delivering liquid to animals comprising:a central pressure regulator for receiving liquid from a relatively high pressure water source; a plurality of drinker lines, each drinker line having a plurality of drinker nozzles;a plurality of pressure reduction valve devices providing an outlet pressure proportional to the pressure set by the central pressure regulator, whereat relatively low pressure liquid is provided to the drinker lines; each of the pressure reduction valve devices comprising: a housing defining a relatively high pressure zone and a relatively low pressure zone; a flow regulating valve through which liquid can flow from the relatively high pressure zone to the relatively low pressure zone when the regulating valve is open; and whereby the central pressure regulator can be set to thereby control the outlet pressure of the plurality of drinker lines by affecting the inlet pressure to each of the plurality of pressure reduction valve devices.

On the one hand, it is advantageous to keep human interference to a minimum - i.e. provide for as much automatic control of the drinking process as possible to reduce labor and avoid disturbing the flock; while on the other hand, it is advantageous to avoid the use of electrical wires and such due to the corrosive atmosphere in poultry houses; as well as to avoid complicated systems which tend to be expensive.

It is also important to be able to change (control) the water pressure to the poultry in order to encourage proper consumption, especially in the case of growing chicks whose water requirements rapidly increase as they grow. In simpler system, changing the water pressure typically requires adjustment to each drinker line, i.e. each pressure regulator and/or pressure reduction device associated with each drinker line. Further, it is desirable to design for purging (flushing) of the drinker lines to flush residual material and the like from the lines, however, without undo complication to the system to avoid expensive design.

### SUMMARY OF THE INVENTION

The present invention relates to a system designed to provide liquid to animals. As the system is particularly suited to providing water to poultry, it will, without limitation, be described in regard to that implementation.

According to the invention there is provided a system according to claim 1 for delivering a liquid, such as water, to animals, such as poultry, the system comprising: a central pressure regulator for receiving liquid from a relatively high pressure liquid source; a plurality of drinker lines, each drinker line having a plurality of drinker nozzles; a plurality of pressure reduction valve devices providing an outlet pressure proportional to the pressure set by the central pressure regulator, the valve devices respectively associated with the plurality of drinker lines and downstream of said central pressure regulator, the valve devices having an inlet fed by piping and an outlet whereat relatively low pressure liquid is provided to the drinker lines; each of the pressure reduction valve devices comprising: a housing defining a relatively high pressure zone and a relatively low pressure zone; a relatively small area diaphragm in the relatively high pressure zone; a relatively large area diaphragm in the relatively low pressure zone and rigidly connected to the small area diaphragm, the relative areas of the diaphragms determining the inlet to outlet pressure ratio of the valve devices; a flow regulating valve through which liquid can flow from the relatively high pressure zone to the relatively low pressure zone when the regulating valve is open; and an internal by-pass mechanism for allowing liquid to flow from the valve device inlet to the valve device outlet bypassing the flow regulating valve, whereby the central pressure regulator can be set to thereby control the outlet pressure of the plurality of drinker lines by affecting the inlet pressure to each of the plurality of pressure reduction valve devices.

In the specification and claims, the terms "liquid" and "water" may be used interchangeably without limitation specifically to water, rather any suitably flowing medium.

In accordance with some embodiments, the poultry drinker system further comprises a drinker line pressure indicator; in other embodiments the system comprises an electronic pressure controller for automatic adjustment of the central pressure regulator; in other embodiments, the pressure reduction valve devices of the system comprise a calibration mechanism for affecting the inlet to outlet pressure ratio thereof; in other embodiments, the bypass mechanism comprises a bypass valve having separated channels for alternatively diverting liquid at the inlet of the valve device from the high pressure zone to the low pressure zone, which in particular embodiments, the bypass valve is adapted to be manually operated, whereas in other embodiments adapted to be electronically controlled.

Using the above-described system allows controlling the delivery of liquid to animals, by adjusting the central pressure regulator to control the pressure in the drinker lines.

It is a particular feature of the invention to provide a system wherein the valve devices provide a predictable pressure reduction between their inlet and outlet pressure for convenient and predictable pressure control to the drinker lines, those valve devices being controllable from the central pressure regulator. In preferred embodiments, such pressure control is accomplished by providing a constant proportional inlet/outlet pressure ratio by the pressure reduction valve; and in particular by using a pair of diaphragms having different effective areas, rather than only one large diaphragm and a spring or two different springs, which due to the spring constant(s), may provide a less than linear inlet-to-outlet pressure ratio.

It is another particular feature of the invention to provide a flushing mechanism that allows flushing of the drinker lines as well as key portions of the pressure reduction valve; in particular embodiments, wherein the flushing mechanism is integrated with the pressure reduction valve.

### BRIEF DESCRIPTION OF THE DRAWINGS

The invention may be understood upon reading of the following detailed description of non-limiting exemplary embodiments thereof, with reference to the following drawings, in which:
Fig. 1 is a perspective view of an embodiment of a poultry drinker system of the present invention; and
**Figs. 2A-2C** are sectional views of a proportional pressure regulating/reduction valve device particularly adapted for use in the present drinker system, the device in: (a) the closed (no flow), non-flushing state; (b) the normal flow, non-flushing state; and (c) in the flushing state, respectively.

The following detailed description of the invention refers to the accompanying drawings referred to above. Dimensions of components and features shown in the figures are chosen for convenience or clarity of presentation and are not necessarily shown to scale. Wherever possible, the same reference numbers will be used throughout the drawings and the following description to refer to the same and like parts.

### DETAILED DESCRIPTION OF EMBODIMENTS OF THE INVENTION

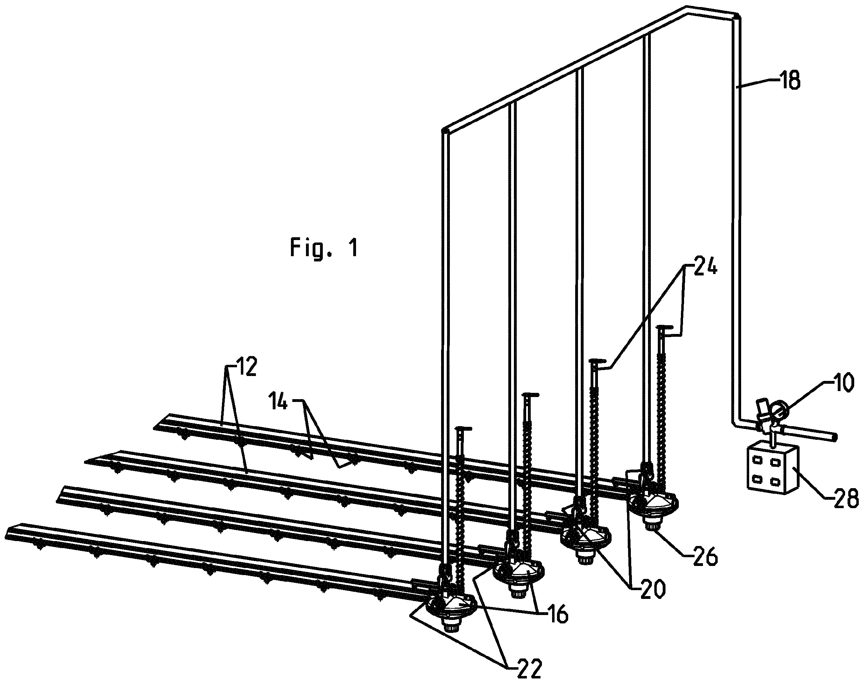

**Fig. 1** shows a drinker system in accordance with embodiments of the invention for receiving water or other liquid from a relatively high pressure liquid/water source (not shown), for example at mains pressure, while providing the liquid at a relatively low pressure, to animals, such as poultry. The drinker system includes a central pressure regulator **10** for providing a first pressure reduction to the water from the water source; a plurality of drinker lines **12,** each line having a plurality of drinker nozzles **14**; and a plurality of pressure reduction valve devices **16**, one such device associated with each drinker line, for providing the liquid at a relatively low pressure to the at least one drinker line.

Water flowing from central pressure regulator **10** to pressure reduction devices **16** is typically run through piping **18** preferably having a height well above the floor of the watering area in which the poultry are situated and even more so above the height of humans, for example, about 2.5m in order to prevent the piping from disturbing the poultry and for ease of human movement in the poultry house if required. As a result, the minimum pressure at which water arrives to the pressure reduction devices **16** is equal to the head of the water or about 250cm water column. Piping **18** leads to inlets **20** of the pressure reduction devices **16**; and drinker lines **12** are fed by outlets **22** of the pressure reduction devices.

Also notable in Fig. 1 is a drinker line pressure indicator, for example, a transparent site glass or site tube **24** associated with each pressure reduction device **16** for measuring and displaying the outlet pressure, i.e. water pressure delivered to each drinker line **12**; and a pressure calibration knob **26** for initial calibration (setting) of the pressure reduction devices' outlet pressure. In some embodiments, the system further includes an electronic pressure controller **28** for automatic adjustment of the central pressure regulator **10**.

In practice, high pressure water arriving from the high pressure water source is regulated via central pressure regulator **10** to a relatively intermediate pressure, typically in the range of 0.25-3.0 bar. The water is distributed via piping **18** to each of the plurality of pressure reduction valve devices **16** where the water pressure is reduced again, in a manner proportional to the pressure set by central pressure regulator **10** (as will be explained in more detail below). The pressure of the water delivered to the drinker lines **12** (i.e. to the poultry) can therefore be controlled by controlling central pressure regulator **10**. This is significant as it is important to maintain proper pressure, which changes as the poultry grows and due to other conditions, in order to positively affect the health and growth of the poultry, especially rapidly growing chicks, for example.

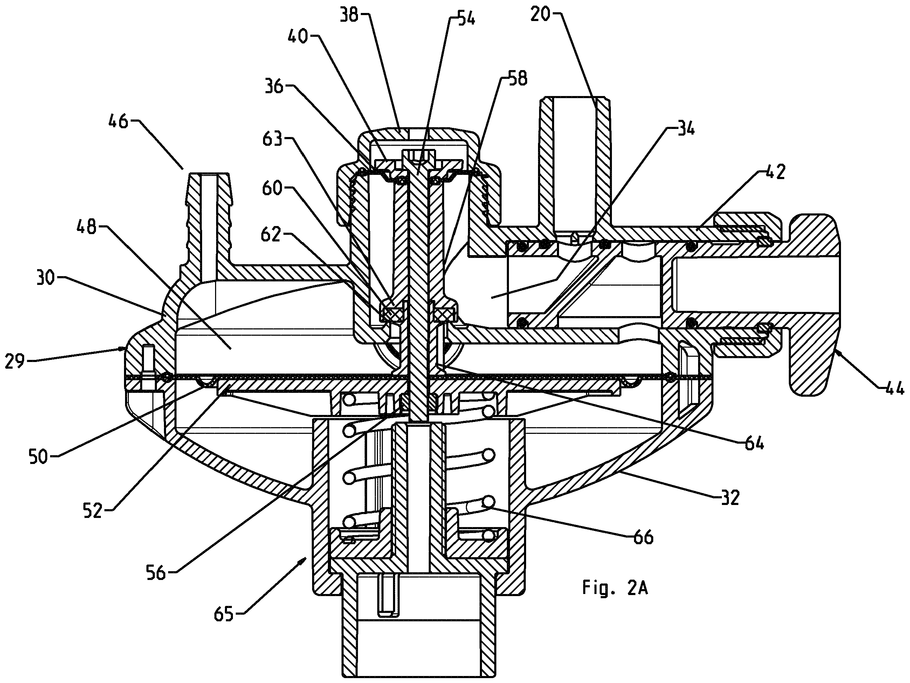

In **Figs. 2A-2C** there is shown an embodiment of the pressure reduction devices **16** by way of sectional views thereof in various states of operation. The devices **16** include a housing **29** with an upper housing portion **30** and a lower housing portion **32**, the upper housing portion defining a first relatively high pressure zone **34** (at a pressure regulated by central pressure regulator **10**) which during drinking (normal flow) receives water via inlet **20**. In high pressure zone **34** is a relatively small area diaphragm **36** fixed at its periphery between a cap **38** and upper housing portion **30** and supported by a relatively small area support plate **40**. Upper housing portion **30** also defines a tubular by-pass or flushing valve receiving portion **42** for receiving an integrated internal by-pass or flushing valve **44** of the valve device **16**.

Upper housing portion **30** also includes a pressure measurement connection or nipple **46** to which site tube **24** is connected. The site tube **24** communicates with a relatively low pressure zone **48** of the proportional pressure reducing valve device **16.** Low pressure zone **48** is generally defined by upper housing portion **30** and a relatively large area diaphragm **50**, which is supported by a relatively large area support plate **52.** Small diaphragm **36** is operably connected to large diaphragm **50** via a rigid connector, for example bolt **54** and nut **56.** Surrounding bolt **54** in high pressure zone **34** is a first rigid sleeve **58.**

The ratio of the areas of the diaphragms **36** and **50** provide for a pressure reduction valve device outlet pressure that is proportional to the valve device's inlet pressure, i.e. the pressure set by the regulator **10**. A typically pressure ratio is about 40:1. Thus, for example, controlling the central pressure regulator **10** in a range of 0.25-3.0 bar results in a drinker line pressure about 0.0065-0.075 bar (6.5-75.0 cm water column).

A first end of sleeve **58** interfaces with diaphragm **36** and a valve seal **60** is disposed within a second end of the sleeve. The valve seal **60** interfaces with a valve seat **62** when the valve device **16** is in the closed (no flow) state (Fig. 2A). The valve seal **60** and valve seat **62** form a regulating valve **63** of the pressure reduction valve device **16**. A second rigid sleeve **64** surrounds the bolt **54** in low pressure zone **48**.

Housed in lower housing portion **32** is a calibration mechanism **65** having a calibration spring **66**, which is adjustable by the pressure calibration knob **26** (Fig. 1). The calibration mechanism **65** is used to affect/adjust the initial outlet pressure of the valve devices), which is sometimes not completely consistent from device to device due to minor tolerances in the components thereof. Typically a one-time setting/calibration is all that is required to coordinate the outlet pressure of the plurality of valve devices **16**, which is verifyable by the site tubes **24**.

Fig. 2A shows the pressure reduction valve device **16** in a closed (non-flow) state, which occurs when the pressure in the drinker line **12**, or more specifically the pressure in low pressure zone **48**, is not below the pressure in the high pressure zone **34** divided by the pressure reduction factor. The desired pressure of water fed to the drinker lines **12** (i.e. in the low pressure zone **48**), is the pressure in the high pressure zone **34** divided by the ratio of areas of the large diaphragm **50** to the small diaphragm **36** (pressure reduction factor). Thus, the pressure pushing (down) on the large diaphragm **50**, translated to its support plate **52**, pulls (down) on bolt **54**, to close the regulating valve **63**, i.e. close seal **60** to seat **52**.

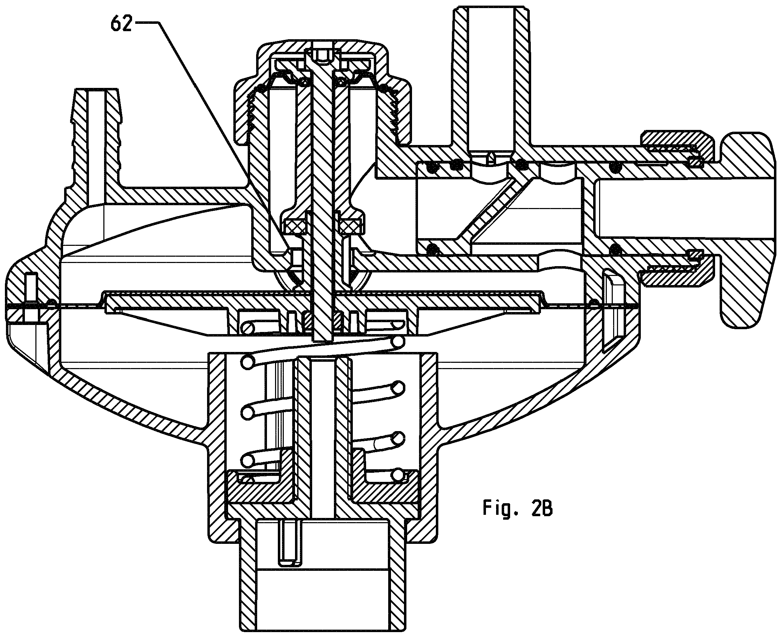

Fig. 2B shows the pressure reduction valve device **16** in an open (normal-flow) state, which occurs when the pressure in the drinker line **12**, or more specifically the pressure in low pressure zone **48**, is below the pressure in the high pressure zone **34** divided by the pressure reduction factor, which occurs when the drinker nozzles **14** are opened (during drinking). Thus, the relatively high pressure in the high pressure zone **34** pushes (up) on its support plate **40**, moving (raising) bolt **54**, to open the regulating valve **63**, i.e. open seal **60** from seat **52**.

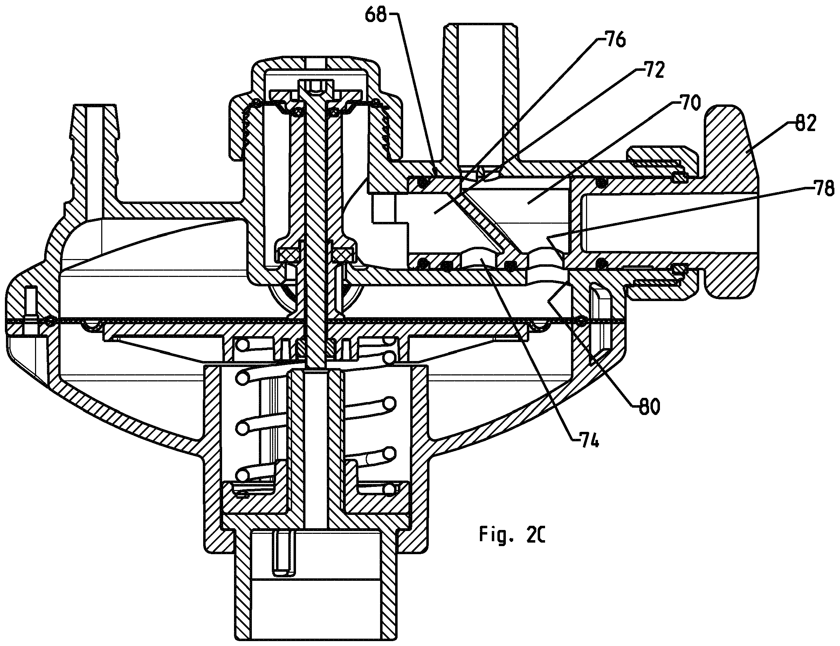

Fig. 2C shows the pressure reduction valve device **16** in a bypass (flushing/purging) state, which shall be described in conjunction with a description of details of integrated internal by-pass or flushing valve **44**. Flushing valve **44** has an extension **68** extending into flushing valve receiving portion **42** and with a by-pass channel **70** and a normal flow channel **72**, at the distal end thereof. Normal flow channel **72** has a channel inlet **74** which is aligned with valve device inlet **20** when the by-pass valve **44** of the valve device **16** is in the non-flushing state (Figs. 2A and 2B); and not aligned with the valve device inlet **20** when in the flushing state (Fig. 2C). By-pass channel **70** has an opening **76** which is aligned with valve device inlet **20** when the by-pass valve **44** of the valve device **16** is in the flushing state (Fig. 2C); and not aligned with the valve device inlet **20** when in the non-flushing state (Figs. 2A and 2B). By-pass channel **70** further has an outlet **78** which is aligned with a flushing aperture **80** of the upper housing portion **30** when in the flushing state (Fig. 2C).

In one exemplary alternative embodiment (not shown), the by-pass valve **44** is designed to be insertable and partially withdrawn (for example having an inward/outward screwing mechanism) in order to align apertures or channels with the valve device's inlet **20** to vary flow between a flushing and non-flushing state, *mutatis mutandis.*

By-pass valve has a manual operation knob **82** for convenient actuation of the flushing state, however, in some embodiments (not shown), the valve device **16** includes an automatic flush-activation mechanism, for example, including a small motor for rotating the by-pass valve **44** between the flushing and non-flushing states (or other such mechanisms, for example wherein the by-pass valve is moved inward and outward to provide flow passage switching between a flushing and non-flushing mode). Another example of an automatic flushing mechanism (by-pass mechanism) is an electrically operated valve (not shown) having an inlet connected externally at or near inlet **20** and having an outlet connected to the flushing valve receiving portion **42** wherein the receiving portion **42** is hydraulically separated (e.g. by an internal wall) from the inlet **20** so as to deliver the flushing liquid directly to flushing aperture **80** of the upper housing portion **30.**

Thus, there is provided a cost effective and uncomplicated drinker system and pressure reduction valve device therefor. The pressure in the drinker lines **12** is conveniently controllable by controlling the pressure at the central pressure regulator **10**.

Further, the drinker lines **12** and the low pressure zone **48** of the pressure reduction valve device **16** are conveniently flushable without need for expensive or complicated auxiliary systems. While the by-pass mechanism described in embodiments of the present drinker system and valve device therefor, does not rinse the high pressure zone **34**, this is typically not a practical concern.

## Claims

1. A drinker system for delivering liquid to animals comprising:
a central pressure regulator (10) for receiving liquid from a relatively high pressure water source;
a plurality of drinker lines (12), each drinker line having a plurality of drinker nozzles (14);
a plurality of pressure reduction valve devices (16) providing an outlet pressure proportional to the pressure set by the central pressure regulator, the valve devices respectively associated with the plurality of drinker lines and downstream of said central pressure regulator, the valve devices having an inlet (20) fed by piping (18) and an outlet (22) whereat relatively low pressure liquid is provided to the drinker lines;
each of the pressure reduction valve devices comprising:
a housing (29) defining a relatively high pressure zone (34) and a relatively low pressure zone (48);
a relatively small area diaphragm (36) in the relatively high pressure zone;
a relatively large area diaphragm (50) in the relatively low pressure zone and rigidly connected to the small area diaphragm, the relative areas of the diaphragms determining the inlet to outlet pressure ratio of the valve devices;
a flow regulating valve (63) through which liquid can flow from the relatively high pressure zone to the relatively low pressure zone when the regulating valve is open; and
an internal by-pass mechanism (44) for allowing liquid to flow from the valve device inlet to the valve device outlet bypassing the flow regulating valve,
whereby the central pressure regulator can be set to thereby control the outlet pressure of the plurality of drinker lines by affecting the inlet pressure to each of the plurality of pressure reduction valve devices.

2. The system according to claim 1, further comprising a drinker line pressure indicator (24).

3. The system according to claim 1, further comprising an electronic pressure controller (28) for automatic adjustment of the central pressure regulator.

4. The system according to claim 1, wherein the pressure reduction valve devices comprise a calibration mechanism (65) for affecting the inlet to outlet ratio thereof.

5. The system according to claim 1, wherein the bypass mechanism comprises a bypass valve (44) having separated channels (70, 72) for alternatively diverting liquid at the inlet of the valve device from the high pressure zone to the low pressure zone.

6. The system according to claim 5, wherein the bypass valve is adapted to be manually operated.

7. The system according to claim 5, wherein the bypass valve is adapted to be electronically controlled.

## Patentansprüche

1. Tränkensystem zur Abgabe von Flüssigkeit an Tiere, mit:
einem zentralen Druckregler (10) zum Aufnehmen von Flüssigkeit aus einer Wasserquelle mit relativ hohem Druck;
einer Mehrzahl von Tränkeleitungen (12), wobei jede Tränkeleitung eine Mehrzahl von Tränkedüsen (14) aufweist;
einer Mehrzahl von druckreduzierenden Ventilvorrichtungen (16), die einen Auslassdruck proportional zu dem durch den zentralen Druckregler eingestellten Druck bereitstellen, wobei die Ventilvorrichtungen jeweils der Mehrzahl von Tränkeleitungen zugeordnet und stromabwärts des zentralen Druckreglers angeordnet sind, wobei die Ventilvorrichtungen einen durch Rohre (18) gespeisten Einlass (20) und einen Auslass (22) aufweisen, an dem Flüssigkeit mit relativ niedrigem Druck den Tränkeleitungen zugeführt wird;
wobei jede der druckreduzierenden Ventilvorrichtungen umfasst:
ein Gehäuse (29), das eine Zone (34) mit relativ hohem Druck und eine Zone (48) mit relativ niedrigem Druck definiert;
eine relativ kleinflächige Membran (36) in der Zone mit relativ hohem Druck;
eine relativ großflächige Membran (50) in der Zone mit relativ niedrigem Druck, die starr mit der kleinflächigen Membran verbunden ist, wobei die relativen Flächen der Membranen das Verhältnis von Einlass- zu Auslassdruck der Ventilvorrichtungen bestimmen;
ein Durchflussregelventil (63), durch das Flüssigkeit von der Zone mit relativ hohem Druck zu der Zone mit relativ niedrigem Druck fließen kann, wenn das Regelventil geöffnet ist; und
einen internen Bypass-Mechanismus (44), der es der Flüssigkeit ermöglicht, unter Umgehung des Durchflussregelventils vom Einlass der Ventilvorrichtung zum Auslass der Ventilvorrichtung zu fließen,
wobei der zentrale Druckregler einstellbar ist, um dadurch den Ausgangsdruck der Mehrzahl von Tränkeleitungen durch Beeinflussen des Eingangsdrucks zu jeder der Mehrzahl von druckreduzierenden Ventilvorrichtungen zu steuern.

2. System nach Anspruch 1, ferner mit einem Tränkeleitungsdruckanzeiger (24).

3. System nach Anspruch 1, ferner mit einer elektronischen Drucksteuerung (28) zum automatischen Einstellen des zentralen Druckreglers.

4. System nach Anspruch 1, bei dem die druckreduzierenden Ventilvorrichtungen einen Kalibrierungsmechanismus (65) zur Beeinflussung ihres Einlass-/Auslassverhältnisses aufweisen.

5. System nach Anspruch 1, bei dem der Bypass-Mechanismus ein Bypass-Ventil (44) mit getrennten Kanälen (70, 72) zum alternativen Umlenken von Flüssigkeit am Einlass der Ventilvorrichtung von der Hochdruckzone in die Niederdruckzone umfasst.

6. System nach Anspruch 5, bei dem das Umgehungsventil für eine manuelle Betätigung ausgelegt ist.

7. System nach Anspruch 5, bei dem das Bypass-Ventil für eine elektronische Steuerung ausgelegt ist.

## Revendications

1. Système d'abreuvoir pour distribuer du liquide à des animaux, comprenant :
un régulateur de pression central (10) pour recevoir du liquide à partir d'une source d'eau à pression relativement élevée ;
une pluralité de conduites d'abreuvoir (12), chaque conduite d'abreuvoir ayant une pluralité de buses d'abreuvoir (14) ;
une pluralité de dispositifs de vanne de réduction de pression (16) fournissant une pression de sortie proportionnelle à la pression réglée par le régulateur de pression central, les dispositifs de vanne respectivement associés à la pluralité de conduites d'abreuvoir et en aval dudit régulateur de pression central, les dispositifs de vanne ayant une entrée (20) alimentée par une tuyauterie (18) et une sortie (22) au niveau de laquelle du liquide à pression relativement basse est fourni aux conduites d'abreuvoir ;
chacun des dispositifs de vanne de réduction de pression comprenant :
un boîtier (29) définissant une zone de pression relativement élevée (34) et une zone de pression relativement basse (48) ;
un diaphragme de surface relativement petite (36) dans la zone de pression relativement élevée ;
un diaphragme de surface relativement grande (50) dans la zone de pression relativement basse et relié de manière rigide au diaphragme de petite surfaces, les surfaces relatives des diaphragmes déterminant le rapport des pressions d'entrée/sortie des dispositifs de vanne ;
une vanne de régulation d'écoulement (63) à travers laquelle du liquide peut s'écouler de la zone de pression relativement élevée à la zone de pression relativement basse lorsque la vanne de régulation est ouverte ; et
un mécanisme de dérivation interne (44) pour permettre à du liquide de s'écouler de l'entrée de dispositif de vanne vers la sortie du dispositif de vanne en contournant la vanne de régulation d'écoulement,
de telle sorte que le régulateur de pression central peut être réglé pour commander ainsi la pression de sortie de la pluralité de conduites d'abreuvoir en affectant la pression d'entrée à chacun de la pluralité de dispositifs de vanne de réduction de pression.

2. Système selon la revendication 1, comprenant en outre un indicateur de pression de conduite d'abreuvoir (24).

3. Système selon la revendication 1, comprenant en outre une commande de pression électronique (28) pour un ajustement automatique du régulateur de pression central.

4. Système selon la revendication 1, dans lequel les dispositifs de vanne de réduction de pression comprennent un mécanisme d'étalonnage (65) pour affecter leur rapport d'entrée/sortie.

5. Système selon la revendication 1, dans lequel le mécanisme de dérivation comprend une vanne de dérivation (44) ayant des canaux séparés (70, 72) pour détourner alternativement le liquide au niveau de l'entrée du dispositif de vanne de la zone de pression élevée vers la zone de pression basse.

6. Système selon la revendication 5, dans lequel la vanne de dérivation est adaptée pour être actionnée manuellement.

7. Système selon la revendication 5, dans lequel la vanne de dérivation est adaptée pour être commandée électroniquement.
